# EUROPEAN PATENT SPECIFICATION

(11) **EP 3 706 267 B1**
(45) Date of publication and mention of the grant of the patent: **24.11.2021**
(21) Application number: 19161425.4
(22) Date of filing: 07.03.2019
(51) Int. Cl.: H02B 3/00, G06K 9/62, G06K 9/46, G06N 3/08, G06N 3/04

(54) **ARTIFICIAL INTELLIGENCE MONITORING SYSTEM USING INFRARED IMAGES TO IDENTIFY HOTSPOTS IN A SWITCHGEAR**
KÜNSTLICHE INTELLIGENZ ÜBERWACHUNGSVORRICHTUNG MIT INFRAROTBILDERN ZÜR IDENTIFIKATION VON HOTSPOTS IN EINER SCHALTANLAGE
SYSTÈME DE SURVEILLANCE DE L'INTELLIGENCE ARTIFICIELLE UTILISANT DES IMAGES INFRAROUGES POUR IDENTIFIER DES HOTSPOTS DANS UN APPAREILLAGE DE COMMUTATION

(43) Date of publication of application: 09.09.2020
(73) Proprietor: ABB Schweiz AG, 5400 Baden (CH)
(72) Inventor: Gitzel, Ralf, 68165 Mannheim (DE); Schmidt, Benedikt, 69117 Heidelberg (DE); Subbiah, Subanatarajan, 68809 Neulußheim (DE)
(74) Representative: Maiwald Patent- und Rechtsanwaltsgesellschaft mbH

(56) References cited:
- EP-A2- 0 342 597
- WO-A1-2019/002507
- CN-A- 107 680 195
- US-A1- 2018 307 947
- BINHAI WANG ET AL: "SmartGuard: An autonomous robotic system for inspecting substation equipment", JOURNAL OF FIELD ROBOTICS, vol. 29, no. 1, 16 November 2011 (2011-11-16), pages 123-137, XP055471462, US ISSN: 1556-4959, DOI: 10.1002/rob.20423

## Description

### FIELD OF THE INVENTION

The present invention relates to an apparatus and system for monitoring a switchgear.

### BACKGROUND OF THE INVENTION

WO2019/002507A1 relates to a substation containing switchgear or controlgear with unmanned operation and maintenance. In order to proceed the operating and/or maintenance of such substations in an automized way, and just in case of further need of human operator, to enhance security for the human operator, it is described that the inner room is locked against the outer housing by an inner, automatically operated door, that a robot system is implemented in such, that the robot systems acting area is extended form in the inner room, partly in the area outside the inner room, but inside the outer housing, where spare parts are stored in a spare parts hand over area, for maintenance.

US2018/307947A1 Describes a system for unsupervised cross-domain image generation relative to a first and second image domain that each include real images. A first generator generates synthetic images similar to real images in the second domain while including a semantic content of real images in the first domain. A second generator generates synthetic images similar to real images in the first domain while including a semantic content of real images in the second domain. A first discriminator discriminates real images in the first domain against synthetic images generated by the second generator. A second discriminator discriminates real images in the second domain against synthetic images generated by the first generator. The discriminators and generators are deep neural networks and respectively form a generative network and a discriminative network in a cyclic GAN framework configured to increase an error rate of the discriminative network to improve synthetic image quality.

CN107680195A describes an assistant analysis system and method for intelligent robot patrol of substations. The assistant analysis system comprises an image shooting servo module, a deep-learning identification module and abnormal state inference module; the image shooting servo module is used for assisting an intelligent robot in shooting sample images and inputting the sample images to the deep-learning identification module; the deep-learning identification module is used for establishing three-level pattern identification systems for identifying equipment, parts and statuses respectively,and each pattern identification system is used for object identification of the sample images and inputting identification results to the image shooting servo module and the abnormal state inferencemodule; the abnormal state inference module is used for performing inference engine on equipment status information identified by the deep-learning identification module and displaying inference results to users. It is described that compared with a traditional characteristic-based image identification method, the assistant analysis method has the advantages of high accuracy and generalization capability.

Switchgear failures due to hot spots with high temperatures can have dramatic consequences, for example electric arcs / flash overs that can act almost like explosions. A method and associated system for monitoring and early warning before such incidents develop is highly needed and currently not available, in an affordable form, which could be installed as a standard in every switchgear and give enough information on the switchgear health state. Also, no method or system is available where images of a switchgear are acquired and transmitted for processing elsewhere in order to provide such monitoring and early warning. At the moment, using IR sensors to detect hot spots in circuit breakers, switchgear, and other electrical equipment requires a lot of very precise calibration to measure the temperature at exactly the right position. There is also an associated problem of identifying the right region in the IR image to monitor, which can be done by a human operator but has to be repeated frequently because of for example different circuit breaker types within switchgear and their geometries. A common solution for all switchgear and all circuit breakers within such switchgear is not possible because of different types and geometry.

There is a need to address these issues.

### SUMMARY OF THE INVENTION

Therefore, it would be advantageous to have an improved ability to monitor a switchgear.

The object of the present invention is solved with the subject matter of the independent claims, wherein further embodiments are incorporated in the dependent claims.

According to the invention, there is provided an apparatus for monitoring a switchgear as defined in appended claim 1.

According to the invention, there is provided an apparatus for monitoring a switchgear, the apparatus comprising:
- an input unit;
- a processing unit; and
- an output unit.

The input unit is configured to provide the processing unit with a monitor infra-red image of a switchgear. The processing unit is configured to implement a machine learning classifier algorithm to analyse the monitor infra-red image and determine if there is one or more anomalous hot spots in the switchgear. The machine learning classifier algorithm has been trained on the basis of a plurality of training images of a switchgear. The processing unit is configured to implement an image processing algorithm operating as a discriminator to analyse the monitor infra-red image to determine information relating to the expected efficacy of the machine learning classifier algorithm in analysing the monitor infra-red image. The image processing algorithm is trained to operate as a discriminator on the basis of at least some of the plurality of training images. The output unit is configured to output the information relating to the expected efficacy of the machine learning classifier algorithm in analysing the monitor infra-red image.

According to the invention, the plurality of training images comprises a plurality of synthetic images generated by the image processing algorithm operating as a generator.

According to the invention, the at least some of the plurality of training images used to train the image processing algorithm operating as a discriminator comprises the plurality of synthetic images.

In an example, the output unit is configured to output information relating to the one or more anomalous hot spots.

According to the invention, the information relating to the expected efficacy of the machine learning classifier algorithm in analysing the monitor infra-red image comprises a similarity metric between the monitor infra-red image and the plurality of training images.

According to the invention, the information relating to the expected efficacy of the machine learning classifier algorithm in analysing the monitor infra-red image comprises a similarity metric between the monitor infra-red image and the plurality of synthetic images.

According to the invention, the plurality of synthetic images were generated on the basis of at least one real image of a switchgear.

In an example, the at least one real image comprises image data of at least one circuit breaker.

According to the invention, the plurality of synthetic image comprises a plurality of different synthetic images.

In an example, the at least one real image comprises a plurality of different real images, and wherein the number of real images is less than the number of synthetic images.

According to the invention, the at least one real image is at least one infra-red image. According to the invention, the plurality of training images comprises at least one real infra-red image of a switchgear.

According to the invention, the at least some of the plurality of training images used to train the image processing algorithm as a discriminator comprises one or more of the at least one real infra-red image.

According to the invention, the at least one real infra-red image comprises image data of at least one circuit breaker.

According to the invention, the plurality of synthetic images comprises synthetic infra-red image of a switchgear.

In an example, the plurality of synthetic images comprises image data of at least one circuit breaker.

In an example, the monitor infra-red image comprises image data of at least one circuit breaker.

In an example, the machine learning classifier algorithm is a neural network.

In an example, the neural network is a convolutional neural network.

In an example, the processing unit is configured to update the training of the machine learning classifier algorithm comprising utilisation of the monitor infra-red image.

In an example, the training update comprises a manual indication that the monitor infra-red image comprises no anomalous hot spots or a manual indication that the monitor infra-red image comprises one or more anomalous hot spots.

In an example, the manual indication that the monitor infra-red image comprises one or more anomalous hot spots comprises a manual indication of one or more locations in the monitor infra-red image of the one or more anomalous hot spots.

In an example, the image processing algorithm is a Generative Adversarial Network.

In a second aspect, there is provided a system for monitoring a switchgear, the system comprising:
- an infra-red camera; and
- an apparatus for monitoring a switchgear according to the invention.

The infra-red camera is configured to acquire the monitor infra-red image of the switchgear.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic example relating to a neural network training process and limitations;
Fig. 2 shows a process flow with respect to the detection of overfitting; and
Fig. 3 shows an example of a GAN that comproses 2 neural networks, operating as a generator and a discriminator.

### DETAILED DESCRIPTION OF EMBODIMENTS

The apparatus and system enables hot spots in switchgear, for example in circuit breakers, and in other electrical equipment to be detected through identifying hot spots in infra-red imagery of this equipment. This is achieved through utilization of a machine learning classifier algorithm that has been trained on imagery, at least some of which can be synthetically generated in order that the training set can be significant enough for the machine learning classifier algorithm to be able to identify hot spots in different equipment types, from different vantage points and in different situations. At least some of the data can also be real infrared data. However, the algorithm that generates the synthetic training data also uses that, or at least some of that, training data to determine if an image being interrogated is similar enough to that used in the training for the machine learning classifier algorithm to be able to operate successfully to determine if a switchgear and for example a circuit breaker in that switchgear has a hot spot. Thus, a decision could be made to acquire different imagery to be analysed that could be suitable, or to decide to train the machine learning classifier algorithm further or for example a human operator to intervene and assess the situation.

This is achieved by an apparatus that comprises an input unit, a processing unit, and an output unit. The input unit is configured to provide the processing unit with a monitor infra-red image of a switchgear. The processing unit is configured to implement a machine learning classifier algorithm to analyse the monitor infra-red image and determine if there is one or more anomalous hot spots in the switchgear. The machine learning classifier algorithm has been trained on the basis of a plurality of training images of a switchgear. The processing unit is configured to implement an image processing algorithm operating as a discriminator to analyse the monitor infra-red image to determine information relating to the expected efficacy of the machine learning classifier algorithm in analysing the monitor infra-red image. The image processing algorithm is trained to operate as a discriminator on the basis of at least some of the plurality of training images. The output unit is configured to output the information relating to the expected efficacy of the machine learning classifier algorithm in analysing the monitor infra-red image.

According to the invention, the plurality of training images comprises a plurality of synthetic images generated by the image processing algorithm operating as a generator.

According to the invention, the at least some of the plurality of training images used to train the image processing algorithm operating as a discriminator comprises the plurality of synthetic images.

According to an example, the output unit is configured to output information relating to the one or more anomalous hot spots.

According to the invention, the information relating to the expected efficacy of the machine learning classifier algorithm in analysing the monitor infra-red image comprises a similarity metric between the monitor infra-red image and the plurality of training images.

According to the invention, the information relating to the expected efficacy of the machine learning classifier algorithm in analysing the monitor infra-red image comprises a similarity metric between the monitor infra-red image and the plurality of synthetic images.

According to the invention, the plurality of synthetic images were generated on the basis of at least one real image of a switchgear.

According to an example, the at least one real image comprises image data of at least one circuit breaker.

According to the invention, the plurality of synthetic image comprises a plurality of different synthetic images.

According to an example, the at least one real image comprises a plurality of different real images, and wherein the number of real images is less than the number of synthetic images.

According to the invention, the at least one real image is at least one infra-red image.

According to the invention, the plurality of training images comprises at least one real infra-red image of a switchgear.

According to the invention, the at least some of the plurality of training images used to train the image processing algorithm as a discriminator comprises one or more of the at least one real infra-red image.

According to an example, the at least one real infra-red image comprises image data of at least one circuit breaker.

According to the invention, the plurality of synthetic images comprises synthetic infra-red image of a switchgear.

According to an example, the plurality of synthetic images comprises image data of at least one circuit breaker.

According to an example, the monitor infra-red image comprises image data of at least one circuit breaker.

According to an example, the machine learning classifier algorithm is a neural network.

According to an example, the neural network is a convolutional neural network.

According to an example, the processing unit is configured to update the training of the machine learning classifier algorithm comprising utilisation of the monitor infra-red image.

According to an example, the training update comprises a manual indication that the monitor infra-red image comprises no anomalous hot spots or a manual indication that the monitor infra-red image comprises one or more anomalous hot spots.

According to an example, the manual indication that the monitor infra-red image comprises one or more anomalous hot spots comprises a manual indication of one or more locations in the monitor infra-red image of the one or more anomalous hot spots.

According to an example, the image processing algorithm is a Generative Adversarial Network.

As discussed above, the apparatus can be part of a system that has a camera that acquires the monitor infra-red image and provides this to the processing unit, via the input unit.
Thus, the described apparatus and system provides a way to analyze an infra-red image as a whole without defining regions of interest. It specifically takes into account the fact that there are different circuit breaker (and other electrical equipment) geometries. For this purpose a machine learning classifier algorithm (e.g. a convolutional neural network) is used. The network is trained with data, at least some of which can be artificial data produced by an image processing algorithm such as a Generative Adversarial Network (GAN) and at least part of which can be real infrared data. Furthermore, the apparatus and system uses the image processing algorithm, for example the GAN, operating in a different way to determine if the imagery being analysed, to assess if there are hotspots, is suitable for analysis by the machine learning classifier algorithm. As a result, the expensive human intervention of either calibration or region definition is eliminated from the process, and overfitting is eliminated and it can be determined for example that further training data for the machine learning classifier algorithm is required.

The apparatus and system are explained in more detail for a specific example with reference to a circuit breaker in a switchgear, but this is just one example and the apparatus and system find utility to other parts of switchgear and many other types of electrical equipment, where hot spots can occur and be problematic.

Thus it is convenient to set the scene. There is currently a strong interest in using infrared data to assess a circuit breaker's health state, where hot spots are indicative of a problem and these hotspots are easy for a human to identify and interpret. However, using skilled technicians and engineers in this manner is very expensive. Machine learning algorithms are here utilised to achieve this without a human. However, machine learning algorithms require an extensive training dataset of relevant data, and this is difficult and expensive to provide. Furthermore, there is a possibility or risk of overfitting, where imagery being analysed is too different to that used for training and as a result the machine learning classifier algorithm will not work well. Overfitting can be overcome by adding more training data, but it is not easy to determine if overfitting is occurring and remedial action such as providing more training data being required. The apparatus and system described here addresses this situation.

Continuing with the situation prior to development of the described apparatus and system, there is a strong interest in using IR data to assess a circuit breaker's health state. The hot spots indicative of a problem can be identified by a human operator. However, humans are an expensive resource, and as such it would be advantageous to automate the process. The apparatus and system described here enables this.

Regarding any generic solution that does not require identification of the right areas (e.g. based on a convolutional neural network classifier algorithm), this needs to be robust against the differences in circuit breaker geometry and function to be useful. However, if the trained network has never experienced certain situations, it is less likely to classify them correctly.

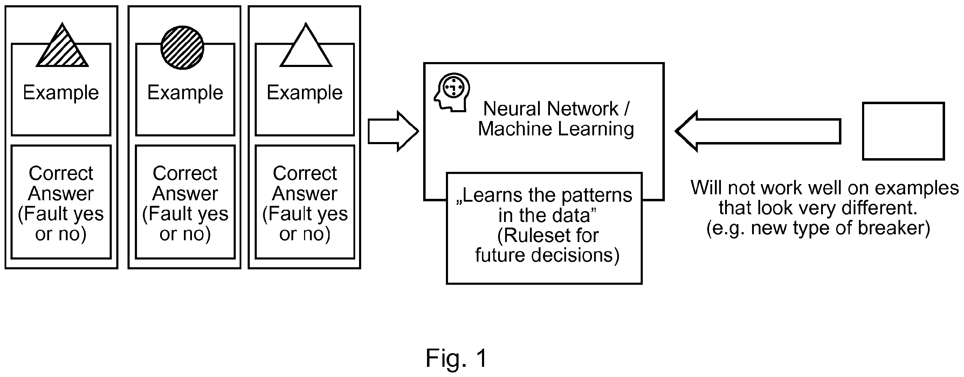

Like a human, the Neural Network learns from experience and is better at judging situations identical or similar to what it has seen before. However, if a neural network is used to automate the process, there is risk of overfitting, which results from the process of training as shown in Fig. 1. Basically, the neural network learns to recognize patterns, which (it is anticipated, at the time of training) will apply to situations encountered later. However, if the example is very different from the original training examples, there is a risk that the neural network will not work, because certain unique properties of the original data have become part of the patterns.

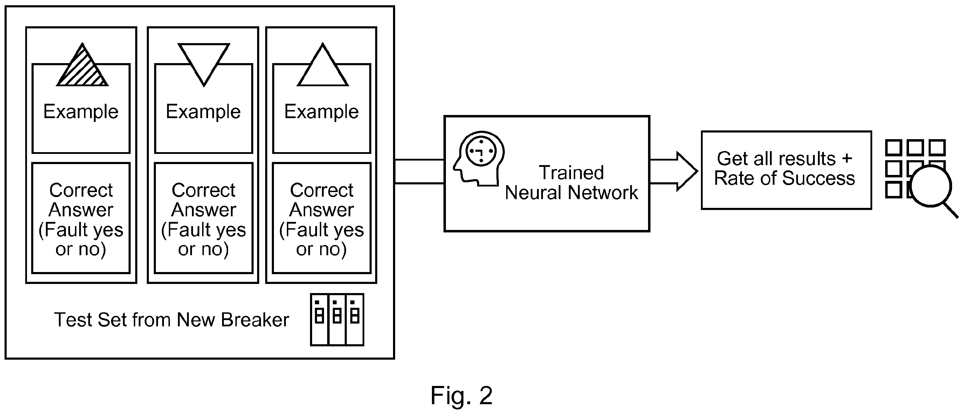

However, detecting overfitting is not easy. Given a large dataset from a new circuit breaker, with both failures and non-failures as well as labels that explain to which category a sample belongs, it is possible to test the trained neural network (This is shown schematically in Fig. 2). If most of the samples are classified correctly, there is no overfitting.

The problem with this approach is that there is often not a large amount of data and almost always there is no failure data among it. This means that the given data is not really well-suited to determine whether a neural network will work well for a particular circuit breaker or not.

Thus to circumvent the large scale collection of data, the apparatus and system described here uses a similarity assessor to determine if the neural network will work with a particular circuit breaker image or not. Even if there is overfitting, a new sample that exhibits all the properties found in the overfitted data still works well and no further training is required for now. If however there is overfitting, this can be determined and further training data provided to train the neural network classifier for example.
A Generative Adversarial Network (GAN) is used by the apparatus and system. Generative Adversarial Networks (GAN) are a technology that is primarily intended for two purposes: On the one hand, the generator part of a GAN can synthetically create new images that look similar to a training set of inputs. On the other hand, the discriminator is trained to spot images, which do not belong to the original training set.

Thus, the apparatus and system utilize a discriminator trained on the original training data of the neural network to assess how far a new sample is away from the original data set. This can be used to establish if there is overfitting, or not, and whether the trained neural network classifier algorithm could successfully analyses the image or not to determine if there are hot spots.

Generative Adversarial Networks (GANs) are a new technology for the generation of data. One well-known example is their use for the generation of photorealistic images of human beings. The best of these images are indistinguishable from a real human portrait but show people that do not exist in real life. Even the inferior examples are still recognizable as faces.

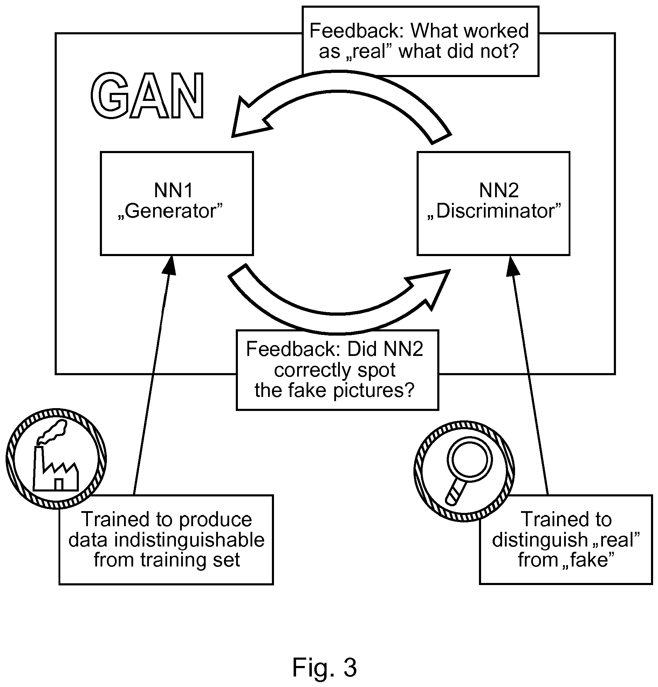

A GAN consists of 2 neural networks, a generator and a discriminator (As shown in Fig. 3). The generator produces new images similar to the input data. The discriminator looks at images and determines whether they are real or generated. The two neural networks give feedback to each other. Thus, the generator gets better at creating images that cannot be distinguished from real ones by the discriminator. The discriminator gets better at detecting images that look different from the original input set.

Therefore, for the apparatus and system described here, a GAN operating as a generator has been used to generate infra-red images of circuit breakers based on previous examples of real infra-red images of circuit breakers. Like the generation of photo-realistic human faces discussed above, the synthetic images of the circuit breakers do not necessarily depict a functional circuit breaker, but creates images with features that look very much like that in a circuit breaker. These images are used along with real infra red imagery to train another neural network (called a "classifier") which can recognize hot spots from infra-red imagery acquired from a circuit breaker being monitored. The classifier is now more robust towards different kinds of circuit breakers as input, and is also in general more accurate.

Then the GAN operating as a discriminator is trained on the images that were generated by the GAN, that were used to train the classifier, enabling the GAN to determine a similarity between a new real image of a circuit breaker, being used to determine a hotspot, and the data that was used to train the classifier - thus the apparatus and system can determine if overfitting is occurring.

Thus is essence, a GAN is trained in parallel to neural network classifier algorithm (i.e. the one that will identify problems in a circuit breaker). The GAN's discriminator is now trained to detect images which are different from the original training set. The discriminator is being used as a similarity assessor as described above. An image considered to be very similar will work well with the classifier. An image considered to be different will probably not work well as input for the classifier. Only in the latter case, additional training is required.

## Claims

1. An apparatus for monitoring a switchgear, the apparatus comprising:
- an input unit;
- a processing unit; and
- an output unit;
wherein, the input unit is configured to provide the processing unit with a monitor infra-red image of a switchgear;
wherein, the processing unit is configured to implement a machine learning classifier algorithm to analyse the monitor infra-red image and determine if there is one or more anomalous hot spots in the switchgear;
wherein, the machine learning classifier algorithm has been trained on the basis of a plurality of training images of a switchgear;
wherein, the processing unit is configured to implement an image processing algorithm operating as a discriminator to analyse the monitor infra-red image to determine information relating to the expected efficacy of the machine learning classifier algorithm in analysing the monitor infra-red image, wherein the plurality of training images comprises at least one real infra-red image of a switchgear and a plurality of different synthetic infra-red images of a switchgear generated on the basis of at least one real infra-red image of a switchgear by the image processing algorithm operating as a generator;
wherein the image processing algorithm is trained to operate as the discriminator on the basis of at least some of the plurality of training images;
wherein the at least some of the plurality of training images used to train the image processing algorithm operating as the discriminator comprises the plurality of synthetic infra-red images and one or more of the at least one real infra-red image;
wherein the information relating to the expected efficacy of the machine learning classifier algorithm in analysing the monitor infra-red image comprises a similarity metric between the monitor infra-red image and the plurality of training images; and
wherein, the output unit is configured to output the information relating to the expected efficacy of the machine learning classifier algorithm in analysing the monitor infra-red image.

2. Apparatus according to claim 1, wherein the output unit is configured to output information relating to the one or more anomalous hot spots.

3. Apparatus according to any of claims 1-2, wherein the at least one real image comprises image data of at least one circuit breaker.

4. Apparatus according to any of claims 1-3, wherein the at least one real infra-red image used to generate the plurality of synthetic infra-red images comprises a plurality of different real infra-red images, and wherein the number of real infra-red images is less than the number of synthetic infra-red images.

5. Apparatus according to any of claims 1-4, wherein the at least one real infra-red image used to generate the plurality of synthetic infra-red images comprises image data of at least one circuit breaker.

6. Apparatus according to any of claims 1-5, wherein the plurality of synthetic infra-red images comprises image data of at least one circuit breaker.

7. Apparatus according to any of claims 1-6, wherein the monitor infra-red image comprises image data of at least one circuit breaker.

8. Apparatus according to any of claims 1-7, wherein the machine learning classifier algorithm is a neural network.

9. Apparatus according to claim 8, wherein the neural network is a convolutional neural network.

10. Apparatus according to any of claims 1-9, wherein the processing unit is configured to update the training of the machine learning classifier algorithm comprising utilisation of the monitor infra-red image.

11. Apparatus according to claim 10, wherein the training update comprises a manual indication that the monitor infra-red image comprises no anomalous hot spots or a manual indication that the monitor infra-red image comprises one or more anomalous hot spots.

12. Apparatus according to claim 11, wherein the manual indication that the monitor infra-red image comprises one or more anomalous hot spots comprises a manual indication of one or more locations in the monitor infra-red image of the one or more anomalous hot spots.

13. Apparatus according to any of claims 1-12, wherein the image processing algorithm is a Generative Adversarial Network.

14. A system for monitoring a switchgear, the system comprising:
- an infra-red camera; and
- an apparatus for monitoring a switchgear according to any of claims 1-13; and
wherein, the infra-red camera is configured to acquire the monitor infra-red image of the switchgear.

## Patentansprüche

1. Vorrichtung zum Überwachen einer Schaltanlage, wobei die Vorrichtung umfasst:
- eine Eingabeeinheit;
- eine Verarbeitungseinheit; und
- eine Ausgabeeinheit;
wobei die Eingabeeinheit zum Versehen der Verarbeitungseinheit mit einem Infrarot-Überwachungsbild einer Schaltanlage konfiguriert ist;
wobei die Verarbeitungseinheit so konfiguriert ist, dass sie einen Klassifikatoralgorithmus für maschinelles Lernen zum Analysieren des Infrarot-Überwachungsbildes implementiert und bestimmt, ob es einen oder mehrere anomale Hotspots in der Schaltanlage gibt;
wobei der Klassifikatoralgorithmus für maschinelles Lernen auf der Basis einer Mehrzahl von Trainingsbildern einer Schaltanlage trainiert wurde;
wobei die Verarbeitungseinheit so konfiguriert ist, dass sie einen Bildverarbeitungsalgorithmus, der als Diskriminator zum Analysieren des Infrarot-Überwachungsbildes fungiert, implementiert, um Informationen in Bezug auf die voraussichtliche Wirksamkeit des Klassifikatoralgorithmus für maschinelles Lernen beim Analysieren des Infrarot-Überwachungsbildes zu bestimmen,
wobei die Mehrzahl von Trainingsbildern mindestens ein reelles Infrarotbild einer Schaltanlage und eine Mehrzahl von verschiedenen synthetischen Infrarotbildern einer Schaltanlage umfasst, die auf der Basis des mindestens einen reellen Infrarotbildes einer Schaltanlage durch den Bildverarbeitungsalgorithmus erzeugt werden, der als Generator fungiert;
wobei der Bildverarbeitungsalgorithmus auf der Basis wenigstens einiger der Mehrzahl von Trainingsbildern trainiert wird, um als Diskriminator zu fungieren;
wobei die wenigstens einigen der Mehrzahl von Trainingsbildern, die zum Trainieren des als Diskriminator fungierenden Bildverarbeitungsalgorithmus verwendet werden, die Mehrzahl von synthetischen Infrarotbildern und eines oder mehrere des mindestens einen reellen Infrarotbildes umfassen;
wobei die Informationen in Bezug auf die voraussichtliche Wirksamkeit des Klassifikatoralgorithmus für maschinelles Lernen beim Analysieren des Infrarot-Überwachungsbildes eine Ähnlichkeitsmetrik zwischen dem Infrarot-Überwachungsbild und der Mehrzahl von Trainingsbildern umfassen;
wobei die Ausgabeeinheit zum Ausgeben der Informationen in Bezug auf die voraussichtliche Wirksamkeit des Klassifikatoralgorithmus für maschinelles Lernen beim Analysieren des Infrarot-Überwachungsbildes konfiguriert ist.

2. Vorrichtung nach Anspruch 1, wobei die Ausgabeeinheit zum Ausgeben von Informationen in Bezug auf den einen oder die mehreren Hotspots konfiguriert ist.

3. Vorrichtung nach einem der Ansprüche 1 bis 2, wobei das mindestens eine reelle Bild Bilddaten mindestens eines Leistungsschalters umfasst.

4. Vorrichtung nach einem der Ansprüche 1 bis 3, wobei das mindestens eine reelle Infrarotbild, das zum Erzeugen der Mehrzahl von synthetischen Infrarotbildern verwendet wird, eine Mehrzahl von verschiedenen reellen Infrarotbildern umfasst, und wobei die Anzahl von reellen Infrarotbildern kleiner als die Anzahl von synthetischen Infrarotbildern ist.

5. Vorrichtung nach einem der Ansprüche 1 bis 4, wobei das mindestens eine reelle Bild, das zum Erzeugen der Mehrzahl von synthetischen Infrarotbildern verwendet wird, Bilddaten mindestens eines Leistungsschalters umfasst.

6. Vorrichtung nach einem der Ansprüche 1 bis 5, wobei die Mehrzahl von synthetischen Infrarotbildern Bilddaten mindestens eines Leistungsschalters umfasst.

7. Vorrichtung nach einem der Ansprüche 1 bis 6, wobei das Infrarot-Überwachungsbild Bilddaten mindestens eines Leistungsschalters umfasst.

8. Vorrichtung nach einem der Ansprüche 1 bis 7, wobei der Klassifikatoralgorithmus für maschinelles Lernen ein neuronales Netzwerk ist.

9. Vorrichtung nach Anspruch 8, wobei das neuronale Netzwerk ein neuronales Faltungsnetzwerk ist.

10. Vorrichtung nach einem der Ansprüche 1 bis 9, wobei die Verarbeitungseinheit zum Aktualisieren des Trainings des Klassifikatoralgorithmus für maschinelles Lernen konfiguriert ist, was Nutzung des Infrarot-Überwachungsbildes umfasst.

11. Vorrichtung nach Anspruch 10, wobei die Trainingsaktualisierung ein manuelles Anzeigen, dass das Infrarot-Überwachungsbild keine anomalen Hotspots umfasst, oder ein manuelles Anzeigen umfasst, dass das Infrarot-Überwachungsbild einen oder mehrere anomale Hotspots umfasst.

12. Vorrichtung nach Anspruch 11, wobei die manuelle Anzeige, dass das Infrarot-Überwachungsbild einen oder mehrere anomale Hotspots umfasst, eine manuelle Anzeige einer oder mehrerer Positionen des einen oder der mehreren anomalen Hotspots im Infrarot-Überwachungsbild umfasst.

13. Vorrichtung nach einem der Ansprüche 1 bis 12, wobei der Bildverarbeitungsalgorithmus ein Generative Adversarial Network ist.

14. System zum Überwachen einer Schaltanlage, wobei das System umfasst:
- eine Infrarotkamera; und
- eine Vorrichtung zum Überwachen einer Schaltanlage nach einem der Ansprüche 1 bis 13; und wobei die Infrarotkamera zum Erfassen des Infrarot-Überwachungsbildes der Schaltanlage konfiguriert ist.

## Revendications

1. Appareil pour surveiller un appareillage de commutation, l'appareil comprenant :
- une unité d'entrée ;
- une unité de traitement ; et
- une unité de sortie ;
l'unité d'entrée étant configurée pour fournir à l'unité de traitement une image infrarouge de surveillance d'un appareillage de commutation ;
l'unité de traitement étant configurée pour mettre en œuvre un algorithme de classificateur d'apprentissage automatique pour analyser l'image infrarouge de surveillance et déterminer s'il existe un ou plusieurs hotspots anormaux dans l'appareillage de commutation ;
l'algorithme de classificateur d'apprentissage automatique ayant été entraîné sur la base d'une pluralité d'images d'entraînement d'un appareillage de commutation ;
l'unité de traitement étant configurée pour mettre en œuvre un algorithme de traitement d'image fonctionnant comme un discriminateur pour analyser l'image infrarouge de surveillance afin de déterminer des informations relatives à l'efficacité attendue de l'algorithme de classificateur d'apprentissage automatique dans l'analyse de l'image infrarouge de surveillance, la pluralité d'images d'entraînement comprenant au moins une image infrarouge réelle d'un appareillage de commutation et une pluralité d'images infrarouges synthétiques différentes d'un appareillage de commutation générées sur la base d'au moins une image infrarouge réelle d'un appareillage de commutation par l'algorithme de traitement d'image fonctionnant comme un générateur ;
l'algorithme de traitement d'image étant entraîné à fonctionner comme le discriminateur sur la base d'au moins certaines de la pluralité d'images d'entraînement ;
l'au moins une partie de la pluralité d'images d'entraînement utilisées pour entraîner l'algorithme de traitement d'image fonctionnant comme le discriminateur comprenant la pluralité d'images infrarouges synthétiques et une ou plusieurs de l'au moins une image infrarouge réelle ;
les informations relatives à l'efficacité attendue de l'algorithme de classificateur d'apprentissage automatique dans l'analyse de l'image infrarouge de surveillance comprenant une métrique de similarité entre l'image infrarouge de surveillance et la pluralité d'images d'entraînement ; et
l'unité de sortie étant configurée pour émettre en sortie les informations relatives à l'efficacité attendue de l'algorithme de classificateur d'apprentissage automatique dans l'analyse de l'image infrarouge de surveillance.

2. Appareil selon la revendication 1, l'unité de sortie étant configurée pour émettre en sortie des informations relatives au ou aux hotspots anormaux.

3. Appareil selon l'une quelconque des revendications 1 et 2, l'au moins une image réelle comprenant des données d'image d'au moins un disjoncteur.

4. Appareil selon l'une quelconque des revendications 1 à 3, l'au moins une image infrarouge réelle utilisée pour générer la pluralité d'images infrarouges synthétiques comprenant une pluralité d'images infrarouges réelles différentes, et le nombre d'images infrarouges réelles étant inférieur au nombre d'images infrarouges synthétiques.

5. Appareil selon l'une quelconque des revendications 1 à 4, l'au moins une image infrarouge réelle utilisée pour générer la pluralité d'images infrarouges synthétiques comprenant des données d'image d'au moins un disjoncteur.

6. Appareil selon l'une quelconque des revendications 1 à 5, la pluralité d'images infrarouges synthétiques comprenant des données d'image d'au moins un disjoncteur.

7. Appareil selon l'une quelconque des revendications 1 à 6, l'image infrarouge de surveillance comprenant des données d'image d'au moins un disjoncteur.

8. Appareil selon l'une quelconque des revendications 1 à 7, l'algorithme de classificateur d'apprentissage automatique étant un réseau neuronal.

9. Appareil selon la revendication 8, le réseau neuronal étant un réseau neuronal convolutif.

10. Appareil selon l'une quelconque des revendications 1 à 9, l'unité de traitement étant configurée pour mettre à jour l'entraînement de l' algorithme de classificateur d'apprentissage automatique comprenant l'utilisation de l'image infrarouge de surveillance.

11. Appareil selon la revendication 10, la mise à jour de l'entraînement comprenant une indication manuelle que l'image infrarouge de surveillance ne comprend aucun hotspot anormal ou une indication manuelle que l'image infrarouge de surveillance comprend un ou plusieurs hotspots anormaux.

12. Appareil selon la revendication 11, l'indication manuelle que l'image infrarouge de surveillance comprend un ou plusieurs hotspots anormaux comprenant une indication manuelle d'un ou plusieurs emplacements dans l'image infrarouge de surveillance du ou des hotspots anormaux.

13. Appareil selon l'une quelconque des revendications 1 à 12, l'algorithme de traitement d'image étant un réseau antagonistes génératif.

14. Système de surveillance d'un appareillage de commutation, le système comprenant :
- une caméra infrarouge ; et
- un appareil pour surveiller un appareillage de commutation selon l'une quelconque des revendications 1 à 13 ; et
la caméra infrarouge étant configurée pour acquérir l'image infrarouge de surveillance de l'appareillage de commutation.
